# EUROPÄISCHE PATENTSCHRIFT

(11) **EP 3 402 994 B1**
(45) Veröffentlichungstag und Bekanntmachung des Hinweises auf die Patenterteilung: **27.10.2021**
(21) Anmeldenummer: 17702010.4
(22) Anmeldetag: 12.01.2017
(51) Int. Cl.: F16B 39/282

(54) **BEFESTIGUNGSELEMENT**
SECURING ELEMENT
ÉLÉMENT DE FIXATION

(30) Priorität: 12.01.2016 DE 102016100446
(43) Veröffentlichungstag der Anmeldung: 21.11.2018
(73) Patentinhaber: EJOT GmbH & Co. KG, 57319 Bad Berleburg (DE)
(72) Erfinder: HELLMIG, Ralph J., 57334 Bad Laasphe (DE); PINZL, Wilfried, 99897 Tambach-Dietharz (DE); SELIMI, Ilir, 35216 Biedenkopf (DE); WEIGEL, Gerd, 35713 Eschenburg (DE)
(74) Vertreter: Puschmann Borchert Kaiser Klettner Patentanwälte Partnerschaft mbB
(86) Internationale Anmeldenummer: PCT/EP2017/050556
(87) Internationale Veröffentlichungsnummer: WO 2017/121793

(56) Entgegenhaltungen:
- WO-A1-2012/076360
- CN-U- 202 132 362
- US-A1- 2010 303 580

## Beschreibung

Die Erfindung betrifft ein Befestigungselement gemäß dem Oberbegriff des Anspruchs 1.

In bekannter Weise umfasst die Schraube einen gewindetragenden Schaft und einen Kopf, wobei durch die Gewindegestaltung eine Eindrehrichtung definiert wird, und ferner der Kopf an seinem dem Schaft zugewandten Ende einen Durchmesser aufweist, der größer als der Durchmesser des Schafts ist, und wobei der Kopf derart gestaltet ist, dass der Randbereich des Kopfes in axialer Richtung in Richtung des Schafts zu seinem Anbindungsbereich am Schaft beabstandet ist, wodurch eine Vorspannung erzeugbar ist. Eine solche Schraube wird auch als Federkopfschraube bezeichnet.

Eine gattungsgemäße Schraube ist der WO 2012/076360 A1 zu entnehmen, die in ihrem Randbereich einen gewellten Flansch aufweist. Durch den konischen Verlauf des Kopfes kann eine Vorspannkraft auf ein Bauteil erzeugt werden, wobei zur Erzeugung der Vorspannung die Wellung in eine gestreckte Lage überführt wird.

Es kann bei solchen Federkopfschrauben insbesondere bei hohen dynamischen Belastungen zur Lösung der Schraube kommen.

Eine gattungsgemäße Federkopfschraube kann gemäß der EP 0 028 746 A1 als eine die Anpresskraft indizierende Schraube eingesetzt werden. Diese Offenbarung betrifft eine Schraube, die eine flache runde Unterseite und sektorweise einen Federbereich aufweist. Der Federbereich hat einen umlaufenden gewellten Randbereich. Dieser Randbereich ist koaxial zum Schaft und radial zum Anschlussbereich versetzt. Der gewellte Randbereich wird bei Anziehen der Schraube plattgedrückt, wodurch ein Anliegen des maximalen Anzugsmoments angezeigt wird. Lockert sich die Schraube im Laufe der Zeit, wird dies durch Wiederauftreten der Wellung im Randbereich deutlich.

So kann das Lösen einer Schraube frühzeitig erkannt werden.

Es ist Aufgabe der Erfindung, das Lösemoment einer Federkopfschraube zu erhöhen und die dynamischen Eigenschaften zu verbessern.

Die Aufgabe wird durch die kennzeichnenden Merkmale des Anspruchs 1 in Verbindung mit den Oberbegriffsmerkmalen gelöst.

Die Unteransprüche bilden vorteilhafte Weiterbildungen der Erfindung.

In bekannter Weise umfasst das Befestigungselement einen gewindetragenden Bereich, wobei durch die Gewindegestaltung eine Befestigungsdrehrichtung und eine axiale Klemmrichtung definiert wird. Ferner weist das Befestigungselement einen Kopf mit einer in Klemmrichtung liegender Kopfunterseite auf, über die eine kraftschlüssige Verbindung mit einem Bauteil hergestellt werden kann. Der Kopf ist derart gestaltet, dass die Kopfunterseite einen gegenüber der Kopfmitte radial beabstandeten Randbereich aufweist und ferner die Kontur der Kopfunterseite, ausgehend vom Randbereich, in Richtung der Kopfmitte entgegen der Klemmrichtung verläuft, wodurch eine Federwirkung erzeugbar ist. Der Randbereich weist zudem in Axialrichtung ein sich veränderndes Umlaufniveau auf.

Erfindungsgemäß steigt entgegen der Befestigungsdrehrichtung das Umlaufniveau über einen Mittelwinkel (β) von wenigstens 65° mit einem Steigungswinkel (α) von höchstens 15° in Klemmrichtung an. Nach Erreichen eines Scheitelpunkts fällt das Umlaufniveau wieder entgegen der Klemmrichtung ab.

Bei zunehmendem Anpressen des Kopfes an ein zu klemmendes Bauteil wird die Kopfunterseite im Mittenbereich ebenfalls in Anlage mit dem zu klemmenden Bauteil gebracht. Der Federkopf wird unter Herstellung einer Vorspannung im elastischen Bereich des Kopfes angezogen.

Durch den geringen Anstieg des Niveaus kann ein reibungsarmer Befestigungsvorgang gewährleistet werden, bei welchem die Oberfläche eines zu klemmenden Bauteils geschont wird. Dies ist besonders bei beschichteten Materialien von Vorteil. Auch kann ein für die Verschraubung verwendetes Drehmoment größtenteils zur Vorspannung des zu klemmenden Elements verwendet werden und muss nicht in Reibenergie umgesetzt werden.

Vorzugsweise erfolgt der Anstieg monoton, insbesondere streng monoton. Dies sorgt für ein kontinuierliches Anpressen des Federkopfes.

Gemäß einer weiteren vorteilhaften Ausgestaltung erfolgt der Anstieg über einen Sektormittenwinkel von wenigstens 70°. Vorzugsweise erfolgt der Anstieg mit einem Anstiegswinkel von höchstens 10°, insbesondere höchstens 5°. Dadurch kann eine oberflächenschonende Anpresskrafterhöhung erfolgen.

Konsequenterweise fällt das Niveau nach einem Anstieg im Anschluss an den Anstieg wieder ab. Dies geschieht vorzugsweise in einem Abfallwinkel (δ) von mehr als 45°, insbesondere mehr als 65°, aber insbesondere in einem Winkel, der kleiner oder gleich 90° gegenüber einer Normalebene zur Schraubenachse ist. So kann eine scharfe Kante bereitgestellt werden, die zur Rückdrehsicherung dient, ohne dass ein Hinterschnitt erforderlich ist. So ist für eine einfache Herstellung des Befestigungselements gesorgt.

Ferner kann vorgesehen sein, dass der Abfall über einen Sektormittenwinkel von höchstens 15° erfolgt.

Durch den sehr flachen Anstieg und dem steilen Abfall kann eine sanfte oberflächenschonende Vorspannung mit Rückdrehsicherung erfolgen.

Ein ansteigender Bereich mit nachfolgendem Abfall ergibt einen Nocken. Erfindungsgemäß können ein bis einschließlich fünf Nocken an der Kopfunterseite gebildet sein. Bei einem Anstiegsbereich liegt dessen Sektormittenwinkel vorzugsweise in einem Bereich von 345° bis annähernd 360°. Bei drei Anstiegsbereichen kann der Sektormittenwinkelbereich bei 105° bis annähernd 120° betragen.

Bei der Bildung einer Nocke genügen in der Abwicklung im gleichen radialen Abstand von der Mittelachse die Anstiegsbreite An und die Abfallbreite Ab dem Zusammenhang Ab(y) * tan (δ) = An(β) * sin (α).

Das Befestigungselement kann vorzugsweise als Schraube ausgebildet sein. In dieser Ausgestaltung schließt bekanntermaßen der gewindetragende Schaft der Schraube an der Kopfunterseite koaxial zum Kopf an. Der Kopf weist insbesondere Antriebskonturen auf, die vorzugsweise an der der Kopfunterseite gegenüberliegenden Kopfoberseite angeordnet sind.

In einer weiteren Ausbildung kann das Befestigungselement auch als Mutter ausgebildet sein, wobei gemäß dieser Ausgestaltung ein Innengewinde konzentrisch im Schraubenkopf liegt und der Antrieb insbesondere seitlich ausgebildet ist.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In den Zeichnungen bedeutet:
- Fig. 1: eine Teilschnittansicht eines erfindungsgemäßen Befestigungselements (Schraube) mit einer Rückhaltestruktur;
- Fig. 2: eine perspektivische Ansicht eines erfindungsgemäßen Befestigungselementkopfes eines Befestigungselements mit einer Rückhaltestruktur;
- Fig. 3: eine perspektivische Ansicht eines erfindungsgemäßen Befestigungselementkopfes eines Befestigungselements mit drei Rückhaltestrukturen;
- Fig. 4: eine Draufsicht auf die Kopfunterseite auf einen Kopf gemäß Fig. 3;
- Fig. 5: eine Abwicklung des Randbereichs eines Kopfes gemäß Fig. 3;
- Fig. 6a: eine perspektivische Ansicht eines erfindungsgemäßen Befestigungselementkopfes eines Befestigungselements mit drei Rückhaltestrukturen mit einem Versatz, und
- Fig. 6b: eine Seitenansicht eines Kopfes gemäß Fig. 6a.

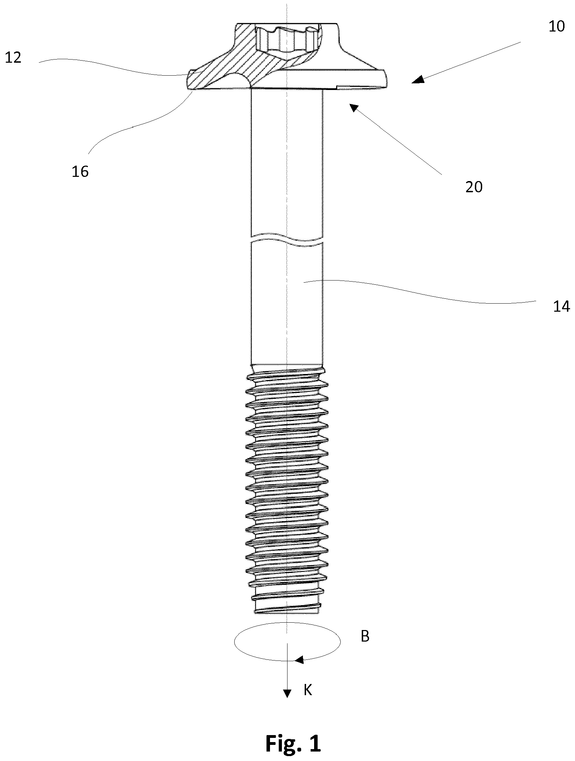

Fig. 1 zeigt eine Teilschnittansicht eines erfindungsgemäßen Befestigungselements in Form einer Schraube 10 mit einem Kopf 12. Der Kopf 12 geht dabei in einen gewindetragenden Schaft 14 über. Das Gewinde definiert eine Befestigungsdrehrichtung B und eine Klemmrichtung K. Der Kopf 12 weist radial beabstandet zu seiner Mitte einen Randbereich 16 auf, der in Anlage mit einem zu klemmenden Bauteil gebracht wird. Die Kontur des Kopfes verläuft an der Kopfunterseite, wie dargestellt, ausgehend vom Randbereich 16 entgegen der Klemmrichtung K. Durch diese Ausgestaltung ergibt sich eine Federwirkung des Randbereichs 16 relativ zur Kopfmitte. Der Randbereich 16 weist dabei eine Niveauänderung in axialer Richtung auf, die in den folgenden Figuren näher beschrieben wird, wobei eine Steigung in Klemmrichtung K über einen Sektormittenwinkel β von 358° Grad erfolgt. Die Steigung erfolgt mit einem Winkel von weniger als 2°, wodurch ein sanftes Anpressen des Kopfes 12 an das zu klemmende Bauteil (nicht gezeigt) erfolgt. Im Anschluss an den ansteigenden Bereich fällt das Niveau entgegen der Klemmrichtung K über einen Sektormittenwinkel γ von 2° in einem Übergangsbereich 20 auf das ursprüngliche Start-Niveau ab. Durch diesen steilen Abfall wird eine Rückdrehsicherung entgegen der Befestigungsdrehrichtung B bereitgestellt. Durch den geringen Anstieg des Randbereich-Niveaus wird eine oberflächenschonende Rückdrehsicherung bereitgestellt.

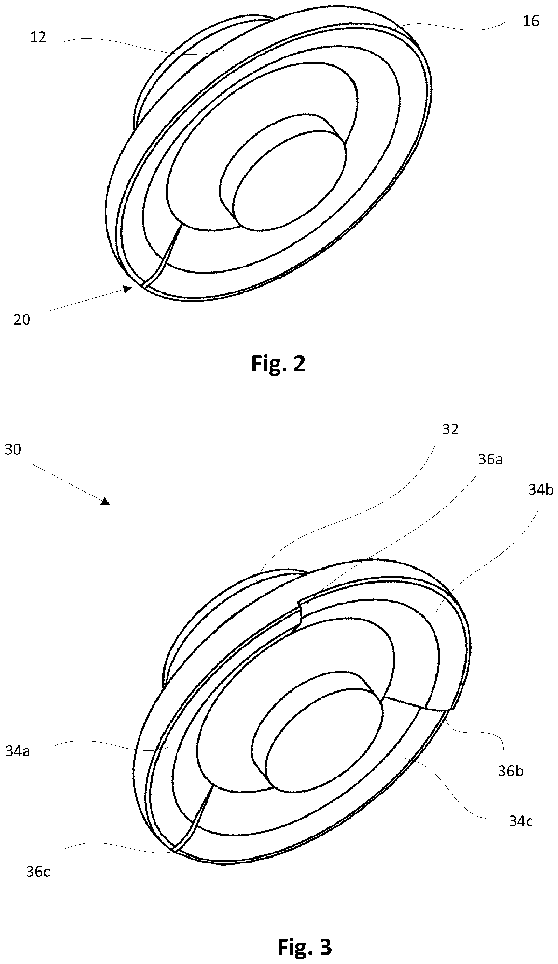

Fig. 2 zeigt eine perspektivische Ansicht des Kopfes 12 mit Sicht auf die Kopfunterseite eines erfindungsgemäßen Befestigungselements, ähnlich Fig. 1. Gut zu erkennen ist in dieser Darstellung der Randbereich 16 als auch der Übergangsbereich 20 sowie die hutartige Kontur des Kopfes.

Fig. 3 zeigt eine perspektivische Ansicht eines Kopfes 32 eines erfindungsgemäßen Befestigungselements 30 mit Rechtsgewinde, wobei auf die Darstellung des Schafts aus Gründen der Übersichtlichkeit verzichtet wurde. Ein entsprechendes Befestigungselement 30 ist in Form eines Befestigungselements 30 mit einem Kopf 32 ausgeführt. Die in Fig. 3 dargestellte Ausführungsform weist drei Anstiegsbereiche 34a, 34b, 34c über einen Sektormittenwinkel β von 118° auf, wobei der Abfall über einen Sektormittenwinkel von 2° erfolgt. Durch die drei Bereiche kann der Kopf 32 eine gleichmäßigere Anpresskraft auf das zu klemmende Bauteil (nicht gezeigt) ausüben. Zudem erhöht die größere Anzahl von sich durch den steilen Abfall ergebenden Rückhaltestrukturen 36a, 36b, 36c gegenüber der Ausführung gemäß Fig. 1 das Lösemoment der Schraube, wobei gleichzeitig eine gleichmäßigere Spannungsverteilung im Kopf 32 vorliegt.

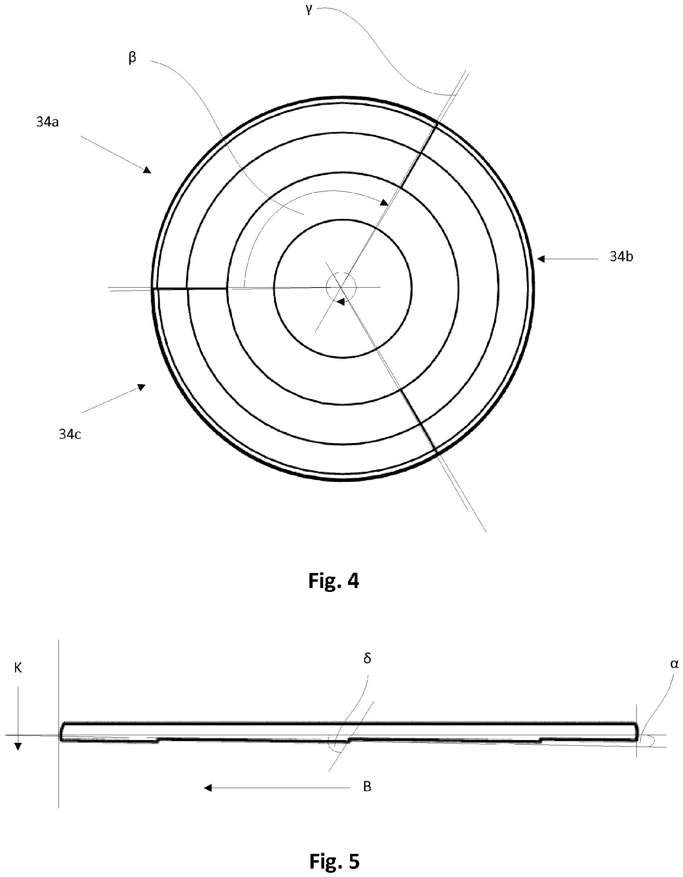

Fig. 4 zeigt eine Draufsicht auf die Kopfunterseite eines Kopfes 32 gemäß Fig. 3. Die drei Anstiegsbereiche 34a, 34b, 34c erstrecken sich jeweils über einen Sektormittenwinkel β von 118°, wobei die Rückhaltestrukturen durch einen Niveauabfall auf das Start-Niveau von ca. γ = 2° bereitgestellt werden.

Fig. 5 zeigt zur besseren Darstellung des Verlaufs des Randbereichsniveaus eine Abwicklung des Randbreichs des Kopfes 32 gemäß der Fig. 3. Eingezeichnet ist das Niveau in Richtung K entgegen der Befestigungsdrehrichtung B über den Sektormittenwinkel β. Wie der Darstellung zu entnehmen ist, steigt das Niveau in Klemmrichtung über 118° mit einer Steigung von etwa 1° an und fällt dann über einen Bereich von 2° wieder auf das Start-Niveau ab, um im weiteren Verlauf erneut anzusteigen. Dadurch ergeben sich die in Fig. 3 bereits beschriebenen Rückhaltestrukturen, die eine effektive Erhöhung des Lösemoments bei dennoch oberflächenschonenden Verspanneigenschaften garantieren.

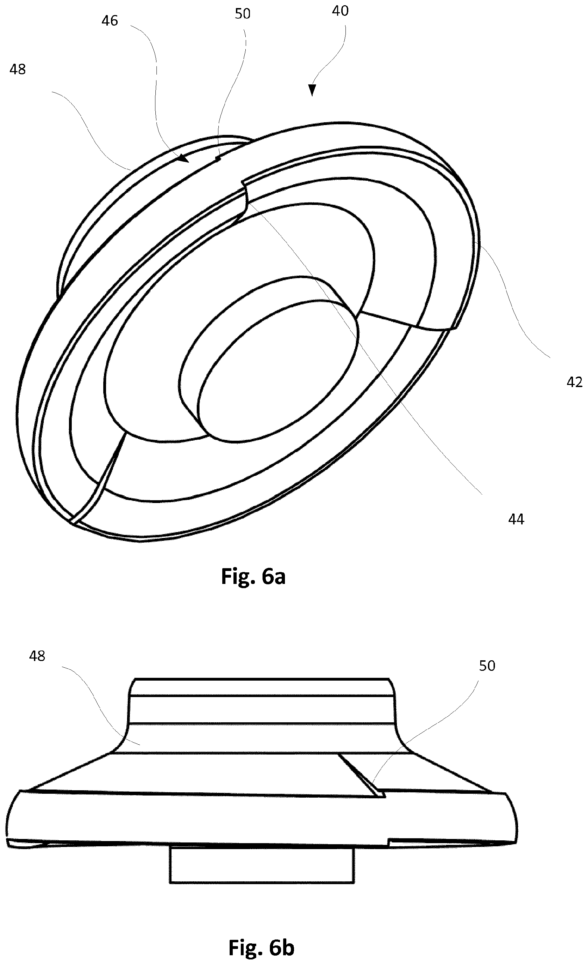

Fig. 6a zeigt eine Seitenansicht eines Kopfes 48 einer weiteren Ausführung eines erfindungsgemäßen Befestigungselements 40 mit Rechtsgewinde, wobei der Schraubenschaft aus Gründen der Übersichtlichkeit nicht dargestellt ist. Gemäß dieser Ausgestaltung überträgt sich die Niveauänderung des Randbereichs 42 an der Kopfunterseite 44 analog auf die Kopfoberseite 46. Durch den Versatz 50 ergibt sich eine gleichbleibende Kopfstärke im Randbereich 42 des Kopfes, wodurch eine gleichmäßigere Spannungsverteilung im Kopf während der Verspannung des Befestigungselements 40 gewährleistet wird und gleichzeitig das bei der umformtechnischen Herstellung verdrängte Volumen erhalten bleibt.

Fig. 6b zeigt eine Seitenansicht des Kopfes 48 gemäß Fig. 6a, wobei in dieser Darstellung der Verlauf des Versatzes 50 deutlich wird.

## Patentansprüche

1. Befestigungselement (10, 30, 40) umfassend einen gewindetragenden Bereich, wobei durch die Gewindegestaltung eine Befestigungsdrehrichtung (B) und eine axiale Klemmrichtung (K) definiert wird, wobei das Befestigungselement (10, 30, 40) einen Kopf (12, 32, 48) mit einer in Klemmrichtung (K) liegender Kopfunterseite (44) aufweist, über die eine kraftschlüssige Verbindung mit einem Bauteil hergestellt werden kann, wobei der Kopf (12, 32, 48) derart gestaltet ist, dass die Kopfunterseite (44) einen gegenüber der Kopfmitte radial beabstandeten Randbereich (16, 42) aufweist und ferner die Kontur der Kopfunterseite (44) ausgehend vom Randbereich (16, 42) in Richtung der Kopfmitte entgegen der Klemmrichtung (K) verläuft, wodurch eine Federwirkung erzeugbar ist, und wobei der Randbereich (16, 42) in Axialrichtung ein sich veränderndes Umlaufniveau aufweist, **dadurch gekennzeichnet, dass** entgegen der Befestigungsdrehrichtung (B) das Umlaufniveau über einen Mittenwinkel (β) von wenigstens 65° mit einem Steigungswinkel (α) von höchstens 15° in Klemmrichtung (K) ansteigt.

2. Befestigungselement (10, 30, 40) nach Anspruch 1, **dadurch gekennzeichnet, dass** der Anstieg (34a, 34b, 34c) monoton, insbesondere streng monoton, erfolgt.

3. Befestigungselement (10, 30, 40) nach Anspruch 1 oder 2, **dadurch gekennzeichnet, dass** der Anstieg (34a, 34b, 34c) über einen Mittenwinkelbereich (β) von wenigstens 70° erfolgt.

4. Befestigungselement (10, 30, 40) nach einem der vorangehenden Ansprüche, **dadurch gekennzeichnet, dass** der Anstieg (34a, 34b, 34c) mit einem Anstiegswinkel (α) von höchstens 10°, insbesondere höchstens 5°, erfolgt.

5. Befestigungselement (10, 30, 40) nach einem der vorangehenden Ansprüche, **dadurch gekennzeichnet, dass** der Abfall (36a, 36b, 36c) im Anschluss an den Anstieg (34a, 34b, 34c) in einem Abfallwinkel (δ) von mehr als 45°, insbesondere mehr als 65° aber <= 90°, gegenüber einer Normalebene zur Schraubenachse erfolgt.

6. Befestigungselement (10, 30, 40) nach einem der vorangehenden Ansprüche, **dadurch gekennzeichnet, dass** der Abfall (36a, 36b, 36c) über einen Mittenwinkelbereich (β) von höchstens 15° erfolgt.

7. Befestigungselement (10, 30, 40) nach einem der vorangehenden Ansprüche, **dadurch gekennzeichnet, dass** die Anstiegsbreite An und die Abfallbreite Ab dem Zusammenhang Ab* tan (δ) = An * sin (α) genügen.

8. Befestigungselement (10, 30, 40) nach einem der vorangehenden Ansprüche, **dadurch gekennzeichnet, dass** das Befestigungselement (10, 30, 40) eine Schraube (10) ist, wobei der Schaft (14) das Gewinde trägt und in der Kopfmitte angeordnet ist und sich in Klemmrichtung (K) erstreckt.

9. Befestigungselement (10, 30, 40) nach einem der vorangehenden Ansprüche, **dadurch gekennzeichnet, dass** das Befestigungselement (10, 30, 40) eine Mutter ist, wobei das Gewinde in der Kopfmitte angeordnet ist.

## Claims

1. Securing element (10, 30, 40) comprising a thread-bearing region, with the design of the thread defining a securing direction of rotation (B) and an axial clamping direction (K), said securing element (10, 30, 40) having a head (12, 32, 48) with a head underside (44) that faces in the clamping direction (K) and can be used to produce a force-locking connection with a component, wherein said head (12, 32, 48) is designed in such a way that the head underside (44) has an edge region (16, 42) which is spaced radially from the head center and, furthermore, the contour of the head underside (44), starting from the edge region (16, 42) towards the center of the head, extends in a direction opposite to the clamping direction (K), which allows a spring effect to be produced, and wherein the edge region (16, 42) has a varying circumferential level in the axial direction, **characterized in that,** as seen in a direction opposite to the securing direction of rotation (B), the circumferential level rises over a central angle (β) of no less than 65° with a pitch angle (α) of no more than 15° in the clamping direction (K).

2. Securing element (10, 30, 40) according to claim 1, **characterized in that** the rise (34a, 34b, 34c) is monotonic, in particular strictly monotonic.

3. Securing element (10, 30, 40) according to claim 1 or 2, **characterized in that** the rise (34a, 34b, 34c) extends over a central angle range (β) of no less than 70°.

4. Securing element (10, 30, 40) according to any one of the preceding claims, **characterized in that** the pitch angle (α) of the rise (34a, 34b, 34c) is no more than 10°, in particular no more than 5°.

5. Securing element (10, 30, 40) according to any one of the preceding claims, **characterized in that** the drop (36a, 36b, 36c) following the rise (34a, 34b, 34c) extends at a drop angle (δ) of more than 45°, in particular more than 65° but <= 90°, with respect to a plane normal to the screw axis.

6. Securing element (10, 30, 40) according to any one of the preceding claims, **characterized in that** the drop (36a, 36b, 36c) extends over a central angle range (β) of no more than 15°.

7. Securing element (10, 30, 40) according to any one of the preceding claims, **characterized in that** the rise width An and the drop width Ab satisfy the relationship Ab* tan (δ) = An* sin (α).

8. Securing element (10, 30, 40) according to any one of the preceding claims, **characterized in that** the securing element (10, 30, 40) is a screw (10), in which the shank (14) carries the thread and is arranged in the center of the head and extends in the clamping direction (K).

9. Securing element (10, 30, 40) according to any one of the preceding claims, **characterized in that** the securing element (10, 30, 40) is a nut, in which the thread is arranged in the center of the head.

## Revendications

1. Élément de fixation (10, 30, 40) comprenant une zone portant un filetage, dans lequel un sens de rotation de fixation (B) et un sens de serrage (K) axial sont définis par la conception de filetage, dans lequel l'élément de fixation (10, 30, 40) présente une tête (12, 32, 48) avec un côté inférieur de tête (44) se situant dans le sens de serrage (K), via lequel côté inférieur de tête une liaison par force peut être établie avec une composante, dans lequel la tête (12, 32, 48) est conçue de telle sorte que le côté inférieur de tête (44) présente une zone de bord (16, 42) espacée radialement par rapport au milieu de tête et le contour du côté inférieur de tête (44) se déroule en outre à l'encontre du sens de serrage (K) depuis la zone de bord (16, 42) dans la direction du milieu de tête, moyennant quoi un effet de ressort peut être produit, et dans lequel la zone de bord (16, 42) présente un niveau de révolution se modifiant dans la direction axiale, **caractérisé en ce que,** à l'encontre du sens de rotation de fixation (B), le niveau de révolution monte dans le sens de serrage (K) selon un angle central (β) d'au moins 65° avec un angle d'inclinaison (α) d'au plus 15°.

2. Élément de fixation (10, 30, 40) selon la revendication 1, **caractérisé en ce que** la montée (34a, 34b, 34c) s'effectue de façon monotone, en particulier strictement monotone.

3. Élément de fixation (10, 30, 40) selon la revendication 1 ou 2, **caractérisé en ce que** la montée (34a, 34b, 34c) s'effectue selon une zone d'angle central (β) d'au moins 70°.

4. Élément de fixation (10, 30, 40) selon l'une des revendications précédentes, **caractérisé en ce que** la montée (34a, 34b, 34c) s'effectue selon un angle d'inclinaison (α) d'au plus 10°, en particulier d'au plus 5°.

5. Élément de fixation (10, 30, 40) selon l'une des revendications précédentes, **caractérisé en ce que** la descente (36a, 36b, 36c) s'effectue à la suite de la montée (34a, 34b, 34c) selon un angle de descente (δ) de plus de 45°, en particulier de plus de 65° mais <= 90°, vis-à-vis d'un plan perpendiculaire par rapport à l'axe de vis.

6. Élément de fixation (10, 30, 40) selon l'une des revendications précédentes, **caractérisé en ce que** la descente (36a, 36b, 36c) s'effectue selon une zone d'angle central (β) d'au plus 15°.

7. Élément de fixation (10, 30, 40) selon l'une des revendications précédentes, **caractérisé en ce que** la largeur de montée An et la largeur de descente Ab satisfont à la relation Ab*tan (δ) = An*sin (α).

8. Élément de fixation (10, 30, 40) selon l'une des revendications précédentes, **caractérisé en ce que** l'élément de fixation (10, 30, 40) est une vis (10), dans lequel la tige (14) porte le filetage et est agencée dans le milieu de tête et s'étend dans le sens de serrage (K).

9. Élément de fixation (10, 30, 40) selon l'une des revendications précédentes, **caractérisé en ce que** l'élément de fixation (10, 30, 40) est un écrou, dans lequel le filetage est agencé dans le milieu de tête.
